# FASCICULE DE BREVET EUROPEEN

(11) **EP 0 562 929 B1**
(45) Date de publication et mention de la délivrance du brevet: **01.10.1997**
(21) Numéro de dépôt: 93400719.6
(22) Date de dépôt: 19.03.1993
(51) Int. Cl.: G06F 3/033, B64D 43/00

(54) **Procédé et dispositif de communication multimodes et multifonctions entre un opérateur et un ou plusieurs processeurs**
Verfahren und Vorrichtung zur multimodalen und multifunktionalen Datenübertragung zwischen einem Benutzer und einem oder mehreren Rechnern
Process and apparatus for multimodal and multifunctional communication between an operator and one or several processors

(30) Priorité: 26.03.1992 FR 9203644
(43) Date de publication de la demande: 29.09.1993
(73) Titulaire: SEXTANT AVIONIQUE, F-92366 Meudon la Forêt Cédex (FR)
(72) Inventeur: Muller, Jean, F-31000 Toulouse (FR); Vaquier, Mariannick, F-91470 Limours (FR)
(74) Mandataire: de Saint-Palais, Arnaud Marie

(56) Documents cités:
- EP-A- 0 129 286
- EP-A- 0 262 991
- DE-A- 2 938 426
- FR-A- 2 241 112
- US-A- 4 796 190
- PATENT ABSTRACTS OF JAPAN vol. 15, no. 188 (P-1201)15 Mai 1991 & JP-A-30 43 788

## Description

La présente invention concerne un procédé et un dispositif de communication multimodes et multifonctions entre un opérateur et un ou plusieurs processeurs.

Elle a plus particulièrement pour but, mais non exclusivement, la réalisation d'un instrument de communication ergonomique et facile d'emploi qui puisse, en outre, contribuer à réduire la complexité et le volume des installations équipant les postes de pilotage des aérodynes actuels.

D'une manière générale, on sait qu'il a déjà été proposé de nombreux types d'instruments de dialogue opérateur/processeur, les instruments les plus répandus étant les claviers (statiques, dynamiques, reconfigurables...) ou les manipulateurs tels que, par exemple, les "Joy-sticks" ou les "souris".

Les modes d'utilisation de ces instruments sont multiples. Ainsi, certaines touches peuvent être associées à des fonctions, d'autres servent à la saisie d'informations qui sont affichées (ou non) au fur et à mesure de leur saisie et qui ne sont prises en compte par le processeur qu'après une action de validation.

Le clavier peut en outre servir à déplacer un curseur sur un écran de manière à l'amener dans une zone déterminée associée à une information identifiable par le processeur. Une action sur des moyens de validation permet alors la prise en compte de cette information par le processeur.

C'est ce dernier processus qui est utilisé par des manipulateurs tels que des souris, dont les déplacements sur une surface quelconque entraînent un déplacement correspondant du curseur et qui comprennent une touche de validation permettant de valider (cliquer) l'information indiquée à l'écran par le curseur.

Dans le cas d'un clavier reconfigurable, la forme, l'emplacement et la fonction des touches peuvent être modifiés, par exemple à chaque changement de mode de fonctionnement du système.

Le clavier peut enfin comprendre des touches dynamiques dont les fonctions qui peuvent varier selon les différents modes de fonctionnement du système, sont affichées à l'écran.

Il s'avère que ces différents instruments de communication ne conviennent pas bien dans le cas de systèmes présentant un nombre élevé de modes de fonctionnement et, en particulier, dans le cas où l'on souhaite communiquer avec plusieurs processeurs dotés chacun de moyens de visualisation respectifs.

On constate, en effet, que la configuration d'un clavier est trop rigide et que, même si il est reconfigurable, elle exige trop d'attention de la part du pilote qui aura beaucoup de difficultés à assimiler toutes les configurations. De même, le déplacement à l'écran d'un curseur à l'aide d'un manipulateur, est une opération qui, dans de nombreux cas, exige trop longtemps l'attention de l'opérateur (par exemple lorsqu'il s'agit d'un simple choix d'un processeur avec lequel on veut dialoguer, du mode de fonctionnement ou d'une variable que l'on veut modifier, etc...).

On connait de EP-A-0 129 286 un boîtier de contrôle par télécommande d'une pluralité d'appareils électriques, comportant une surface tactile servant également d'écran de visualisation. Ce boîtier fonctionne selon deux modes. Dans le premier mode, les appareils à contrôler sont visualisés sur l'écran. Dans le second mode, ce sont les paramètres de contrôle de l'appareil sélecté au premier mode qui sont affichés. On connait également de JP-A-3 043 788 une tablette sensitive sur laquelle le déplacement d'un stylet dans deux zones virtuelles prédéterminées correspondant à deux écrans de visualisation indépendants, fait passer un curseur d'un écran à l'autre.

Un autre inconvénient des instruments actuels concerne leur ergonomie, notamment dans le cas de la modification d'une variable affichée à l'écran.

Habituellement, cette modification est obtenue en exerçant une pression sur une touche (par exemple + ou -) qui provoque une incrémentation ou une décrémentation de la variable, et donc un défilement de cette variable, à une vitesse plus ou moins élevée, jusqu'à ce que l'on atteigne la valeur désirée. Il n'existe ici aucune corrélation entre le geste de l'opérateur et la vitesse de défilement de la variable, ni même entre l'écart valeur actuelle - valeur désirée de la variable et l'amplitude d'un déplacement que doit accomplir l'opérateur pour obtenir la valeur désirée.

Bien entendu, pour obtenir ce résultat, on utilise fréquemment des dispositifs de commande effectuant une conversion analogique/numérique tels que des roues codeuses. Toutefois, cette solution est incompatible avec le caractère multimodes et multifonctions de l'instrument que l'on veut réaliser.

L'invention a donc plus particulièrement pour but de supprimer ces inconvénients.

Elle propose à cet effet un système de communication entre un opérateur et au moins un processeur faisant intervenir :
- une pluralité d'éléments d'affichage gérés par ledit processeur et répartis selon une disposition géométrique déterminée, ces éléments d'affichage pouvant être affectés à des fonctionnalités différentes, présentant une symbologie appropriée à chacune de ces fonctionnalités et permettant d'afficher ou non un paramètre en relation avec cette fonction,
- un instrument de communication comprenant une surface sensible couplée au processeur de manière à entrer en communication avec ce dernier pour assurer la gestion des éléments d'affichage, selon une séquence de fonctionnement comprenant au moins les modes opératoires suivants :
   - un premier mode opératoire selon lequel, vu du processeur, la surface sensible est virtuellement divisée en une pluralité de zones en correspondance isomorphique avec la disposition géométrique des éléments d'affichage, ce premier mode permettant à l'opérateur de sélecter un élément d'affichage et la fonctionnalité qui lui correspond, en agissant directement sur la zone correspondante de la surface sensible, et en validant cette sélection par une action sur des moyens de validation,
   - un deuxième mode opératoire qui succède au premier, et dans lequel une variable affichée sur l'élément d'affichage sélecté est modifiée à la suite d'un déplacement d'un objet tel que le doigt d'un opérateur sur la surface sensible, le processeur effectuant alors, cycliquement, la détection de la position dudit objet sur ladite surface, la détermination du déplacement de l'objet entre deux positions successives, le calcul d'une nouvelle valeur de la variable en fonction de sa valeur au cycle précédent et du déplacement ainsi déterminé, et l'affichage d'une nouvelle valeur.

A ces deux modes opératoires pourra être rajouté un mode opératoire supplémentaire, notamment dans le cas où l'élément d'affichage sélectionné au cours de la première phase opératoire assure l'affichage de plusieurs paramètres, ce mode supplémentaire faisant intervenir un index déplaçable en relation homothétique avec le déplacement d'un objet sur la surface sensible. Des moyens de validation sont en outre prévus pour valider une zone de l'élément d'affichage pointée par l'index, et l'information correspondant à cette zone.

Avantageusement, des moyens pourront être prévus pour faire en sorte qu'à la suite de la sélection d'un élément d'affichage ou d'une zone d'affichage, mais avant la validation de cette sélection, l'élément (ou la zone) d'affichage sélectionné soit reconnaissable.

Des modes d'exécution de l'invention seront décrits ci-après , à titre d'exemples non limitatifs, avec référence aux dessins annexés dans lesquels :
La figure 1 est une vue schématique, en perspective, de la partie avant et de la partie centrale d'un poste de pilotage d'un avion comportant une pluralité d'afficheurs pilotés à partir d'une commande unique constituée ici par une surface sensible ;
La figure 2 est une représentation schématique indiquant les différentes zones de la surface sensible en correspondance isomorphique avec les afficheurs ;
La figure 3 est une représentation schématique des différents éléments affichés sur les deux écrans du système de pilotage de l'aérodyne (PFD) ("Primary Flight Display") ;
La figure 4 représente schématiquement la composition des zones de la surface sensible pour les écrans du type de ceux représentés figure 3 ;
La figure 5 est une représentation schématique d'un afficheur de type ND ("Navigation Display") utilisé dans le poste de pilotage représenté figure 1, au cours d'une phase de révision d'un plan de vol ;
La figure 6 montre la composition des zones de la surface sensible en correspondance avec l'affichage de l'afficheur ND en mode de révision d'un plan de vol ;
La figure 7 est une représentation schématique, en coupe transversale, d'une surface sensible ;
La figure 8 est une vue partielle indiquant la forme et la répartition des électrodes de la surface sensible, ainsi que les circuits électroniques qui leur sont associés.

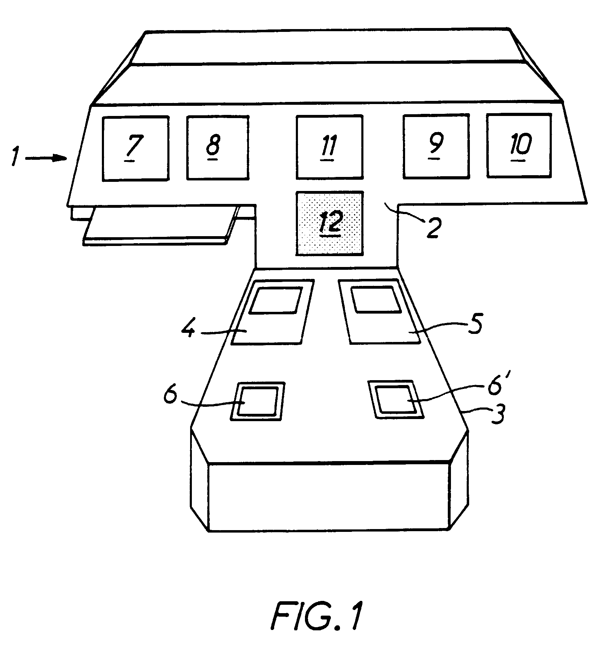

Le poste de pilotage représenté figure 1 est conçu pour deux pilotes assis côte à côte.

Il comprend, sous le pare-brise de l'avion (non représenté) un tableau de bord vertical 1, sensiblement en forme de T dont la partie centrale 2 est prolongée dans le bas, par un panneau horizontal 3. Ce dernier, légèrement surélevé par rapport au plancher du poste de pilotage, sépare les espaces alloués aux deux pilotes. Il supporte une pluralité de commandes manuelles telles que les manettes des gaz, les manettes de commande des volets, des aérofreins, etc... Parmi ces commandes, seules ont été représentées deux consoles clavier/écran 4, 5 disposées côte à côte (une par pilote) et deux surfaces sensibles 6, 6', dont le rôle sera expliqué dans la suite de la description.

Les consoles clavier/écran 4, 5, appelées habituellement MCDU ("Multipurpose Control Display Unit"), sont destinées à assurer un dialogue entre le système de gestion du vol et le pilote, par exemple en vue d'effectuer la révision d'un plan de vol (dans ce dernier cas, cette console permet la saisie des points singuliers définissant le plan de vol et ensuite la modification de ce plan de vol).

Le bandeau supérieur du tableau de bord (qui forme la branche horizontale du T) comprend cinq écrans d'affichage, à savoir :
- deux paires d'écrans latéraux 7, 8-9, 10 respectivement disposés en face de chacun des pilotes, et comprenant chacun :
   . un écran 7, 10 de type PFD qui sert à l'affichage des informations utiles au pilotage, telles que, par exemple, les informations instantanées du vol (vitesse, altitude, cap, assiette, incidence...), et
   . un écran 8, 9 de type ND qui est destiné à présenter les informations relatives à la navigation (route à suivre, balises radio, points de passage, etc...), et
- un écran central 11, de type EWD ("ENGINE AND WARNING DISPLAY") pour la visualisation des informations émanant du système de contrôle centralisé de l'aérodyne, et plus particulièrement, des informations relatives aux moteurs et des messages d'alarme.

La branche verticale du tableau de bord comprend, quant à elle, en dessous de l'écran central EWD 11, un écran de type SD ("SYSTEM DISPLAY") 12 qui sert à présenter les informations relatives aux systèmes de servitude de l'aérodyne.

Ces différents écrans qui sont associés à des processeurs respectifs, forment un système d'affichage à éléments d'affichage multiples avec chacun desquels le pilote doit pouvoir dialoguer, de façon aussi simple et aussi naturelle que possible.

Dans ce système, chaque élément d'affichage peut consister en un écran ou en une partie d'écran, étant entendu qu'un même écran peut comprendre plusieurs zones distinctes constituant chacune un sous-ensemble de l'élément d'affichage qui sera désigné ci-après "sous-élément d'affichage".

Il est clair que la forme et la disposition des écrans, à l'intérieur du poste de pilotage, sont en principe fixes.

Par contre, la forme et la disposition des sous-éléments d'affichage, à l'intérieur de leurs écrans respectifs, peuvent varier, par exemple d'un mode de fonction à un autre.

Dans ce contexte, l'invention a plus particulièrement pour but la réalisation d'une commande centralisée permettant au pilote de dialoguer simplement et ergonomiquement avec tous les éléments d'affichage, ainsi qu'avec les sous-éléments d'affichage.

Pour parvenir à ce résultat, elle propose l'usage d'une surface sensible 6, 6' (une par pilote) couplée aux différents processeurs associés aux éléments d'affichage, affectés à chaque pilote, par exemple par l'intermédiaire d'un rotacteur ou même d'une liaison par Bus commun et/ou interfaces d'entrée/sortie appropriés.

Telle que représentée schématiquement (figure 7), cette surface sensible 6 comprend un élément de support 14 présentant une surface plane rigide recouverte d'un revêtement dit "sensible" permettant de détecter et de localiser la présence d'un objet tel qu'un doigt du pilote sur (ou à proximité immédiate de) ladite surface.

A cet effet, ce revêtement sensible peut comprendre deux nappes d'électrodes 17, 18 reliées les unes aux autres par des liaisons conductrices selon une configuration matricielle, l'une des couches incluant les lignes, tandis que l'autre forme les colonnes (figure 8).

Un dispositif de scrutation 19 applique à ces lignes et ces colonnes un signal électrique et identifie celles d'entre elles sur lesquelles a été détectée une variation du signal, due à la proximité ou la présence de l'objet dont on veut détecter la position.

Un mode d'exécution d'un circuit de liaison a été indiqué, à titre indicatif, entre une ligne et une colonne d'une part, et le dispositif de scrutation 19 d'autre part.

Avantageusement, la position de l'objet sera déterminée par le barycentre de la zone influencée. On obtient ainsi une surface sensible à haute résolution.

Dans cet exemple, la surface sensible ne porte pas de symbologie : En effet, elle doit pouvoir être utilisée quelle que soit la symbologie utilisée par les différents éléments d'affichage.

Comme précédemment mentionné, cette surface sensible présente plusieurs modes de fonctionnement, à savoir :
- une pluralité de modes de sélection d'élément d'affichage, dans chacun desquels la surface sensible est virtuellement divisée en une pluralité de zones en correspondance isomorphique avec la disposition, soit des éléments d'affichage à l'intérieur du poste de pilotage, soit des sous-éléments d'affichage, à l'intérieur de l'un quelconque des éléments d'affichage,
- un mode de remise à jour d'une variable par déplacement d'un objet, par exemple le doigt du pilote sur la surface sensible,
- un mode de sélection d'une zone (correspondant à une fonction) à l'intérieur d'un élément d'affichage, ce mode comprenant le guidage d'un curseur grâce à un déplacement du doigt sur la surface sensible puis la validation de la zone souhaitée une fois qu'elle est repérée par le curseur.

A ces différents modes peut se rajouter un mode "touche dynamique" dans lequel la surface sensible est virtuellement divisée en une pluralité de zones de commande en correspondance isomorphique avec des zones de l'écran dans lesquelles sont indiquées les fonctions obtenues à la suite de la sollicitation des zones de la surface sensible.

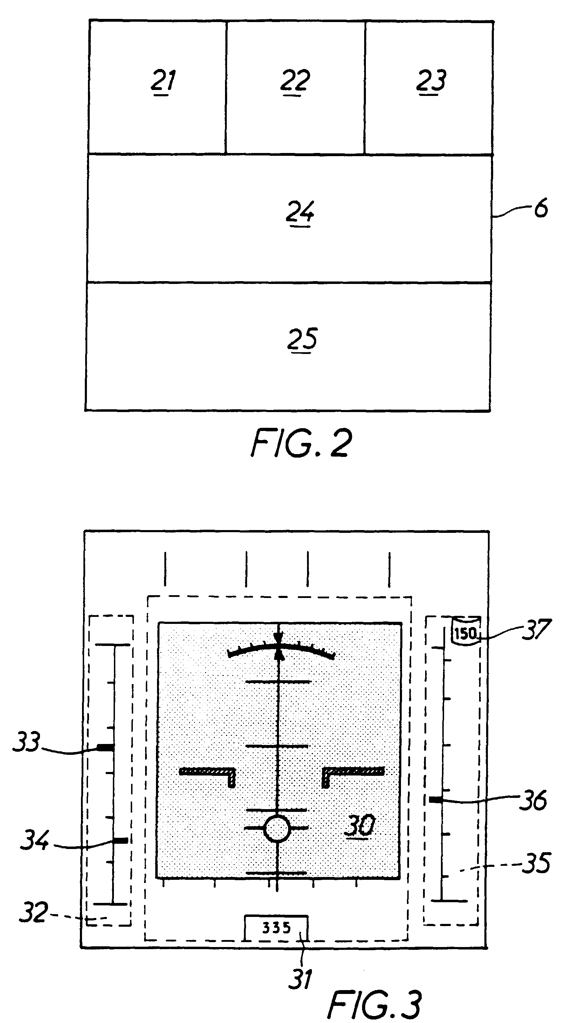

Initialement, les surfaces sensibles se trouvent en mode de sélection des éléments d'affichage (ici des écrans du poste de pilotage, figure 2).

Chaque surface sensible se trouve alors virtuellement divisée en cinq zones, réparties sur trois niveaux, à savoir :
- trois zones 21, 22, 23 disposées côte à côte pour former le premier niveau, ces trois zones correspondant respectivement aux écrans 7, 8, 11 ou 11, 9, 10 du poste de pilotage,
- une zone 24 occupant la totalité du second niveau et qui correspond à l'écran 12, et
- une zone 25 qui occupe le troisième niveau et qui correspond aux consoles clavier/écran 4 ou 5.

Pour effectuer la sélection d'un écran, le pilote doit simplement poser son doigt sur la zone de la surface sensible qui se trouve en correspondance avec cet écran. Cette action provoque une signalisation de l'écran concerné (par exemple l'allumage d'un voyant lumineux). Le pilote doit ensuite valider son choix par une action sur des moyens de validation. Cette validation a pour effet d'établir une liaison entre la surface sensible 6 et le processeur associé à l'écran sélecté et de provoquer un changement de mode pour adopter celui qui correspond audit écran. Bien entendu, ce nouveau mode pourra être un mode de sélection des sous-éléments d'affichage figurant à l'écran, un mode de remise à jour d'une variable, par exemple dans le cas où l'image affichée à l'écran forme une entité dans laquelle la variable se trouve affichée, ou un mode de sélection de zone de l'écran par déplacement d'un curseur.

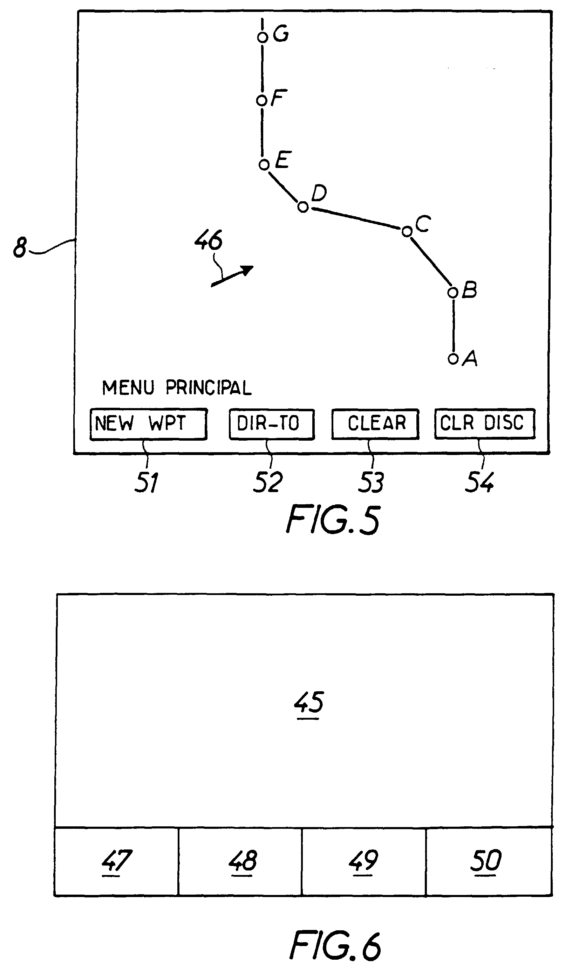

Les figures 3 et 5 montrent deux types d'écrans permettant d'illustrer ces modes de fonctionnement.

Ainsi, l'écran PFD représenté sur la figure 3 (qui correspond à l'un des écrans 7 et 10 de la figure 1) est décomposé en trois parties qui constituent chacune un élément d'affichage distinct, à savoir :
- une partie centrale rectangulaire 30 affichant un horizon directeur de vol selon une symbologie classique, avec une échelle linéaire représentative des assiettes longitudinale et latérale et une échelle circulaire permettant d'indiquer l'écart entre la valeur actuelle du cap et une valeur de consigne affichée dans une fenêtre 31,
- une bande latérale gauche 32 prolongeant sur la gauche la partie centrale 30, cette bande 32 incluant une échelle verticale graduée de part et d'autre de laquelle sont disposés deux index, à savoir : un index 33 indiquant la vitesse de l'avion et un index 34 qui indique la vitesse de consigne, et
- une bande latérale droite 35 qui prolonge sur la droite la partie centrale 30, cette bande 35 incluant une échelle verticale de part et d'autre de laquelle sont disposés deux index, à savoir : un index 36 indiquant l'altitude de l'aérodyne et un index 37 constitué par une fenêtre dans laquelle l'altitude de consigne se trouve affichée.

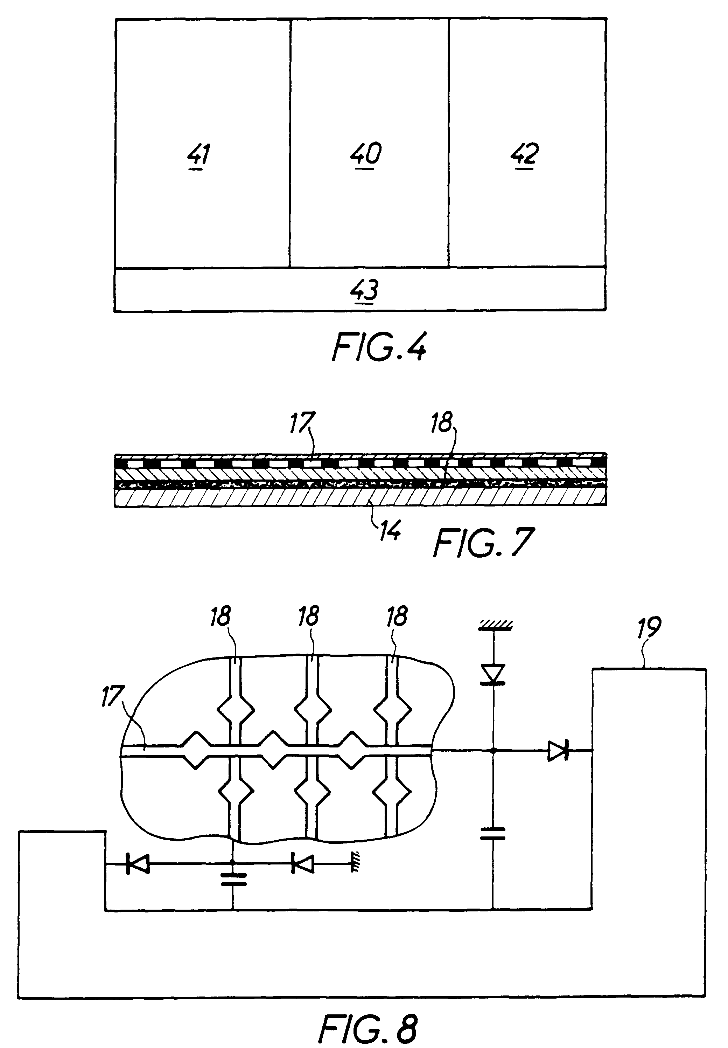

A la suite de la sélection de cet écran par un toucher de la zone 21 de la surface sensible 6, puis d'une validation obtenue par une action sur les moyens de validation, la surface sensible 6 subit une reconfiguration et se trouve divisée en trois zones principales, visibles sur la figure 4, à savoir : une zone 40 qui correspond à la partie centrale 30 de l'écran PFD, une partie latérale gauche 41 qui correspond à la bande latérale gauche 32 et une partie latérale droite 42 qui correspond à la bande latérale droite 35.

La sollicitation de l'une de ces parties de la surface sensible 6, par exemple la partie 41, provoque, dans un premier temps, l'apparition d'un cadre lumineux bordant la bande latérale gauche 32 (représenté en traits interrompus).

La validation de cette sélection provoque un changement de mode de fonctionnement de la surface sensible 6, qui passe automatiquement en mode de modification d'une variable.

Dans ce mode de fonctionnement, la surface sensible 6 n'est plus virtuellement divisée : Elle permet de déterminer l'amplitude et le sens des déplacements du doigt du pilote, et ceci, quelle que soit sa position sur la surface sensible 6, de calculer une nouvelle valeur de la variable (ici, la consigne d'altitude) en fonction de l'amplitude de ce déplacement, et d'afficher les nouvelles valeurs de la variable (ici, la consigne d'altitude) grâce à l'index 34 prévu à cet effet.

La sollicitation des parties 40 et 42 enclenche un processus similaire permettant au pilote de modifier respectivement les consignes de cap et de vitesse.

Dans l'exemple représenté sur la figure 4, la surface sensible 6 comprend en outre une zone inférieure 43 dont la sollicitation suivie d'une validation, provoque un retour du système en mode de sélection des écrans et la recomposition de la surface sensible selon la disposition représentée figure 2.

La sélection d'un écran ND (par exemple l'écran 8) par sollicitation et validation de la zone 22 de la surface sensible 6 permet par exemple au pilote de passer en mode de révision du plan de vol latéral de l'avion.

Dans ce mode de fonctionnement qui se trouve partiellement illustré sur la figure 5, la surface sensible 6 pourra être divisée en deux parties, à savoir :
- une première partie 45 servant à commander le déplacement d'un curseur 46 sur l'écran 8 grâce à un déplacement homothétique de celui du doigt du pilote sur la surface sensible et à valider une zone de l'écran indiquée par le curseur 46,
- une deuxième partie délimitant des zones 47, 48, 49, 50 constituant des touches dynamiques dont les fonctions (qui varient d'un mode à un autre) sont indiquées dans le bas de l'écran 8 dans des zones 51, 52, 53, 54 situées en correspondance isomorphique avec les zones 47, 48, 49, 50.

Initialement, le plan de vol affiché à l'écran comprend un trajet passant par les points singuliers A à G situés chacun au centre des zones sensibles indiquées par des petits cercles.

Dans le bas de l'écran, les quatre plages rectangulaires affichent, par exemple, les quatre modes de révisions proposés par le menu principal, à savoir :
- le mode "NEW WPT" (insertion d'un nouveau point dans le plan de vol),
- le mode "DIR-TO" qui permet de définir un point vers lequel l'aérodyne doit se diriger à partir de sa position actuelle,
- le mode "CLEAR" qui permet d'effacer un point singulier,
- le mode "CLR DISC" qui permet de supprimer une discontinuité.

La sélection puis la validation de l'une des touches dynamiques provoque l'affichage dans les zones 51 à 54 d'un menu secondaire. La première partie (45) de l'écran 8 peut être alors utilisée pour déplacer le curseur 46, en mode homothétique, par exemple pour désigner et/ou pour valider un point singulier existant et, éventuellement, pour créer un nouveau point singulier.

## Revendications

1. Système de communication entre un opérateur et au moins un processeur, ce système faisant intervenir :
- une pluralité d'éléments d'affichage (4, 5 et 7 à 12) gérés par ledit processeur et répartie selon une disposition géométrique déterminée, ces éléments d'affichage (4, 5 et 7 à 12) pouvant être affectés à des fonctionnalités différentes, présentant une symbologie appropriée à chacune de ces fonctionnalités et permettant d'afficher ou non un paramètre en relation avec cette fonction,
- un instrument de communication comprenant une surface sensible (6, 6') couplée au processeur de manière à entrer en communication avec ce dernier pour assurer la gestion des éléments d'affichage (4, 5 et 7 à 12),
le dialogue entre ledit instrument et ledit processeur s'effectuant selon une séquence de fonctionnement comprenant au moins les modes opératoires suivants :
- un premier mode opératoire selon lequel, vu du processeur, la surface sensible (6, 6') est virtuellement divisée en une pluralité de zones en correspondance isomorphique avec la disposition géométrique des éléments d'affichage (4, 5 et 7 à 12), ce premier mode permettant à l'opérateur de sélecter un élément d'affichage et la fonctionnalité qui lui correspond, en agissant directement sur la zone correspondante de la surface sensible (6, 6'), et en validant cette sélection par une action sur des moyens de validation,
- un deuxième mode opératoire qui succède au premier, et dans lequel une variable affichée dans l'élément d'affichage sélecté est modifiée à la suite d'un déplacement d'un objet tel que le doigt d'un opérateur sur la surface sensible (6, 6'), le processeur effectuant alors, cycliquement, la détection de la position dudit objet sur ladite surface (6, 6'), la détermination du déplacement de l'objet entre deux positions successives, le calcul d'une nouvelle valeur de la variable en fonction de sa valeur au cycle précédent et du déplacement ainsi déterminé, et l'affichage d'une nouvelle valeur.

2. Système selon la revendication 1,
caractérisé en ce que les susdits éléments d'affichage (4, 5 et 7 à 12) consistent en des écrans d'afficheur distincts les uns des autres et pouvant être affectés à des fonctionnalités différentes les unes des autres, et/ou en des parties d'un même écran (sous-élément d'affichage).

3. Système selon l'une des revendications 1 et 2,
caractérisé en ce que le dialogue entre ledit instrument et ledit processeur comprend un mode opératoire supplémentaire faisant intervenir un index (46) déplaçable sur un élément d'affichage préalablement sélecté en relation homothétique avec le déplacement d'un objet sur la surface sensible (6, 6') et des moyens permettant de valider la zone de l'élément d'affichage pointée par l'index (46) et, en même temps, l'information correspondant à cette zone.

4. Système selon l'une des revendications précédentes,
caractérisé en ce que le dialogue entre ledit élément et ledit processeur comprend en outre un mode opératoire faisant intervenir une partition de la surface sensible (6, 6') délimitant des touches dynamiques (47 à 50) et une partition correspondante de l'élément d'affichage sélecté délimitant des zones (51 à 54) dans lesquelles sont indiquées les fonctions affectées aux touches dynamiques (47 à 50).

5. Système selon l'une des revendications précédentes,
caractérisé en ce qu'avant la validation effectuée au cours de la première phase opératoire, la sélection d'un élément d'affichage provoque une signalisation de l'élément d'affichage sélecté.

6. Système selon la revendication 4,
caractérisé en ce que ladite signalisation consiste en l'apparition d'un cadre lumineux autour de l'élément d'affichage (31, 32, 35).

## Patentansprüche

1. Kommunikationssystem zwischen einem Operator und mindestens einem Prozessor, das verwendet:
- mehrere Anzeigeelemente (4, 5 und 7 bis 12), die vom Prozessor verwaltet werden und gemäß einer bestimmten geometrischen Anordnung verteilt sind, wobei diese Anzeigeelemente (4, 5 und 7 bis 12) verschiedenen Funktionalitäten zugeordnet werden können, eine geeignete Symbolik für jede dieser Funktionalitäten aufweisen und es ermöglichen, einen Parameter in Verbindung mit dieser Funktion anzuzeigen oder nicht,
- ein Kommunikationsgerät mit einer empfindlichen Fläche (6, 6'), die mit dem Prozessor derart gekoppelt ist, daß sie mit diesem in Verbindung tritt, um die Anzeigeelemente (4, 5 und 7 bis 12) zu steuern,
wobei der Dialog zwischen dem Gerät und dem Prozessor gemäß einem Betriebsablauf erfolgt, der mindestens die folgenden Betriebsarten aufweist:
- einen ersten Betriebsmodus, gemäß dem aus der Sicht des Prozessors die empfindliche Fläche (6, 6') virtuell in eine Vielzahl von Zonen in isomorpher Übereinstimmung mit der geometrischen Anordnung der Anzeigeelemente (4, 5 und 7 bis 12) aufgeteilt ist, wobei dieser erste Modus es dem Operator ermöglicht, ein Anzeigeelement und die ihm entsprechende Funktionalität auszuwählen, indem er direkt auf die entsprechende Zone der empfindlichen Oberfläche (6, 6') einwirkt und indem er diese Wahl durch eine Einwirkung auf Validierungsmittel validiert,
- einen zweiten Betriebsmodus, der auf den ersten folgt und in dem eine auf dem ausgewählten Anzeigeelement angezeigte Variable nach einer Verschiebung eines Gegenstands wie z.B. eines Fingers des Operators auf der empfindlichen Fläche (6, 6') verändert wird, wobei der Prozessor dann zyklisch die Erfassung der Position des Gegenstands auf der Fläche (6, 6'), die Bestimmung der Verschiebung des Gegenstands zwischen zwei aufeinanderfolgenden Positionen, die Berechnung eines neuen Werts der Variablen in Abhängigkeit von ihrem Wert im vorhergehenden Zyklus und von der so bestimmten Verschiebung und die Anzeige eines neuen Werts durchführt.

2. System nach Anspruch 1, dadurch gekennzeichnet, daß die Anzeigeelemente (4, 5 und 7 bis 12) aus unterschiedlichen Anzeigeschirmen, die unterschiedlichen Funktionalitäten zugeordnet werden können, und/oder aus Bereichen eines einzigen Bildschirms (Anzeige-Unterelement) bestehen.

3. System nach einem der Ansprüche 1 und 2, dadurch gekennzeichnet, daß der Dialog zwischen dem Gerät und dem Prozessor einen zusätzlichen Betriebsmodus enthält, der einen Index (46), der auf einem vorher ausgewählten Anzeigeelement in homothetischer Verbindung mit der Verschiebung eines Gegenstands auf der empfindlichen Fläche (6, 6') verschiebbar ist, und Mittel verwendet, um die Zone des Anzeigeelements, auf die der Index (46) zeigt, und gleichzeitig die dieser Zone entsprechende Information zu validieren.

4. System nach einem der vorhergehenden Ansprüche, dadurch gekennzeichnet, daß der Dialog zwischen dem Element und dem Prozessor außerdem einen Betriebsmodus aufweist, der eine Aufteilung der empfindlichen Fläche (6, 6'), die dynamische Tasten (47 bis 50) begrenzt, und eine entsprechende Aufteilung des gewählten Anzeigeelements verwendet, die Zonen (51 bis 54) begrenzt, in denen die den dynamischen Tasten (47 bis 50) zugeordneten Funktionen angezeigt sind.

5. System nach einem der vorhergehenden Ansprüche, dadurch gekennzeichnet, daß vor der während der ersten Betriebsphase durchgeführten Validierung die Auswahl eines Anzeigeelements eine Anzeige des gewählten Anzeigeelements bewirkt.

6. System nach Anspruch 5, dadurch gekennzeichnet, daß die Anzeige im Auftreten eines leuchtenden Rahmens um das Anzeigeelement (31, 32, 33) herum besteht.

## Claims

1. A system for communication between an operator and at least one processor, using :
- a plurality of display elements (4,5 and 7 to 12) managed by said processor and laid out according to a predetermined geometrical disposition, these display elements (4, 5 and 7 to 12) being assignable to different functionalities, having an approproate symbology for each of these functionalities and enabling a parameter in relation with this function to be displayed or not,
- a communication instrument comprising a sensitive surface (6, 6') coupled to said processor so as to set up communication with the latter in order to ensure management of said display elements (4, 5 and 7 to 12),
said dialogue between said instrument and said processor being carried out according to an operating sequence comprising at least the following operational modes :
. a first operational mode according to which, seen from said processor, said sensitive surface (6, 6') is virtually divided into a plurality of areas corresponding isomorphically with said geometrical disposition of said display elements (4, 5 and 7 to 12), this first mode enabling the operator to select a display element and the functionality corresponding to it, by acting directly on the corresponding area of said sensitive surface (6, 6'), and by validating this selection by action on said validating means,
. a second operational mode which follows the first one, and in which a variable displayed on the selected display element is modified subsequent to displacement of an object such as the operator's finger on said sensitive surface (6, 6'), said processor then cyclically performing detection of the position of said object on said surface (6, 6'), determination of the displacement of the object between two successive positions, computation of a new value of said variable as a function of its value in the previous cycle and of the displacement thus determined, and display of a new value.

2. The system as claimed in claim 1,
characterized in that the above-mentioned display elements (4, 5 and 7 to 12) consist in display screens that are separate from one another and can be assigned to functionalities that are different to one another and/or in parts of a same screen (display sub-element).

3. The system as claimed in one of claims 1 and 2, characterized in that the dialogue between said instrument and said processor comprises an additional operating mode using an index (46) that can be displaced on a previously selected display element in homothetic relation with the displacement of an object on said sensitive surface (6, 6'), and means enabling validation of the area of said display element pointed out by said index (46), and, at the same time, the information corresponding to this area.

4. The system as claimed in one of the preceding claims, characterized in that the dialogue between said element and said processor further comprises an operating mode using a division of the sensitive surface (6, 6') delimiting dynamic keys (47 to 50) and a corresponding division of the selected display element delimiting areas (51 to 54) in which are indicated the functions assigned to said dynamic keys (47 to 50).

5. The system as claimed in one of the preceding claims, characterized in that, before the validation performed during said first operational phase, the selection of a display element causes a signalling of said selected display element.

6. The system as claimed in claim 4,
characterized in that said signalling consists in the appearance of a luminous frame around said display element (31, 32, 35).
